Europäisches Patentamt

European Patent Office

Office européen des brevets

(19)

(11) Veröffentlichungsnummer: **0 337 058**

**A1**

(12) **EUROPÄISCHE PATENTANMELDUNG**

(21) Anmeldenummer: **89101092.8**

(22) Anmeldetag: **23.01.89**

(51) Int. Cl.⁴: **G01B 5/00 , G01B 5/20 , G01B 7/28**

(30) Priorität: **15.03.88 DE 3808549**

(43) Veröffentlichungstag der Anmeldung:
**18.10.89 Patentblatt 89/42**

(84) Benannte Vertragsstaaten:
**DE FR GB IT**

(71) Anmelder: **Rheinmetall GmbH
Ulmenstrasse 125 Postfach 6609
D-4000 Düsseldorf(DE)**

(72) Erfinder: **Knäbel, Horst
Friedenstrasse 10a
D-4005 Meerbusch 1(DE)**

(54) **Vorrichtung zur Kontrolle radialer Masse von Werkstücken.**

(57) Die Erfindung betrifft eine Vorrichtung zur Kontrolle radialer Maße von Werkstücken, wie beispielsweise Wellen und dergleichen.

Um gegenüber bekannten gattungsgemäßen Vorrichtungen eine weit größere Meßstellendichte zu erreichen, wird erfindungsgemäß eine Vorrichtung (10) vorgeschlagen, die aus einem plattenförmigen Grundkörper (14) und zwei darauf vor und hinter einem Werkstück (48) befestigten Blattfederstegen (16) sowie aus zwei seitlich vom Werkstück (48), auf den Blattfederstegen (16) angebrachten Aufspannleisten (26) besteht. Die Aufspannleisten (26) sind mit Längenmeßtastern (62, 64) bestückbar und können durch Betätigen eines Stellorgans (38), das auf den Blattfedersteg (16) wirkt, in axialer Richtung am Werkstück (48) um eine Kontrollstrecke (49) verschoben werden. Im Bereich der Kontrollstrecke (49) ist es dadurch möglich, den entsprechenden Werkstück-Bereich hinsichtlich Konizität, Balligkeit und Zylindrizität sowie hinsichtlich Abweichungen vom Soll-Durchmesser zu kontrollieren, wobei bei rotierendem Werkstück (48) ein einzelner Längenmeßtaster (62) ausreicht.

Fig. 1

## Vorrichtung zur Kontrolle radialer Maße von Werkstücken

Die Erfindung bezieht sich auf eine Vorrichtung zur Kontrolle radialer Maße, wie Durchmesser von Werkstücken, insbesondere von Wellen, Achsen, Naben und dergleichen, mit den Merkmalen des Oberbegriffs des Patentanspruchs 1.

Zur Kontrolle radialer Maße an Werkstücken, insbesondere von Durchmessern an Wellen, Achsen, Naben und dergleichen, sind Vorrichtungen bekannt, bei denen ein Grundkörper als starrer Grundrahmen mit Halterungen ausgebildet ist. auf denen die Meßvorrichtung, bestehend aus einem Führungselement mit Anstellvorrichtung, Längenmeßtaster und Tastspitze oder einem Längenmeßtaster mit Klemmeinrichtungen direkt aufgebaut sind.

Wird das zu messende Werkstück während der Kontrolle nicht um seiner Rotationsachse bewegt, so sind jeweils zwei sich gegenüberliegende Meßvorrichtungen pro Meßstelle, also pro Abmaß, erforderlich. Der konstruktiv bedingte Minimal-Abstand zwischen zwei benachbarten Meßvorrichtungen verhindert jedoch häufig eine verlangte Meßstellendichte. In diesem Falle werden zusätzlich axial gekröpfte Tastspitzen mit den Meßtastern verwendet, die im allgemeinen jedoch jeweils auf ein bestimmtes Werkstück und die erforderliche Meßstellendichte hin angefertigt werden müssen.

Eine vielfach gestellte Aufgabe bei der Kontrolle derartiger Werkstücke sind Messungen der Parallelität, Zylindrizität oder Konizität. Bei bekannten Meßvorrichtungen wird der zu kontrollierende Werkstück-Bereich in diesem Falle in einzelne Abschnitte unterteilt, an deren Bezugskanten jeweils eine Kontrolle des radialen Maßes wie oben beschrieben erfolgt, was im allgemeinen weitere zusätzliche Meßvorrichtungen und Hilfsvorrichtungen erfordert.

Demzufolge sind bekannte Vorrichtungen der gattungsgemäßen Art sehr aufwendig und benötigen entsprechend der Vielzahl von beispielsweise elektronischen Längenmeßtastern darüberhinaus auch einen hohen elektronischen Aufwand, da jeder einzelne Längenmeßtaster eine Einspeisung und eine Signalverstärkung benötigt.

Dazu kommt die Schwierigkeit, daß beispielsweise zwei auf den gleichen Durchmesser des Werkstücks angesetzte Längenmeßtaster zur Kontrolle der Zylindrizität über absolut gleichgroße Empfindlichkeit verfügen müssen, da. sonst die Empfindlichkeitsdifferenz dem zu kontrollierenden Werkstück als Abweichung vom Sollwert angelastet wird.

Der Erfindung liegt daher die Aufgabe zugrunde, eine Vorrichtung zur Kontrolle radialer Maße von Werkstücken zu schaffen, die die Nachteile der vorgenannten Vorrichtungen vermeidet und die bei vergleichbarer großer Meßstellendichte mit wesentlich weniger Meßvorrichtungen auskommt, wobei auf extrem gekröpfte Tastspitzen verzichtet werden kann und eine weitgehend flächendeckende Kontrolle radialer Maße, insbesondere im Bereich zylindrischer und konischer Abschnitte des zu kontrollierenden Werkstücks ermöglicht werden soll, so daß die Vorrichtung mit weitaus geringerem Aufwand für die Erfassung und Auswertung der Meßdaten auskommt und demzufolge wesentlich preisgünstiger ist.

Diese Aufgabe wird gelöst durch eine erfindungsgemäße Vorrichtung mit den Merkmalen des kennzeichnenden Teils des Patentanspruchs 1.

Vorteilhafte Ausgestaltungen und Weiterbildungen der Erfindung gehen aus den Unteransprüchen hervor.

Durch die erfindungsgemäße Maßnahme, zur Aufnahme der Meßvorrichtungen zwei werkstückbezogener, leicht demontierbarer, spiegelbildlich zu einer Werkstück-Mittellinie stehende Aufspannleisten vorzusehen, sie mit zwei rechtwinklig zur Werkstück-Mittellinie stehenden und mit einem Grundkörper verbundenen Blattfederstegen zu einem Parallelogramm zu verbinden, so daß die Aufspannleisten durch wenigstens ein Stellorgan um eine vorgebbare Kontrollstrecke verfahrbar sind, wird in vorteilhafter Weise durch die auf den Aufspannleisten montierten Meßvorrichtungen längs der Kontrollstrecke wahlweise eine kontinuierliche oder punktuelle Kontrolle der axialen Maße des Werkstücks ermöglicht.

Die Verwendung von möglichst breiten Blattfedern in den Blattfederstegen, die möglichst weit voneinander entfernt auf dem Grundkörper montiert sind, gewährleistet eine hohe Steifigkeit und eine exakte Parallelführung der Aufspannleisten und damit eine hohe Reproduzierbarkeit der von den Meßvorrichtungen aufgenommenen Meßdaten.

Ein weiterer Vorteil der erfindungsgemäßen Vorrichtung ist darin zu sehen, daß mit ihr handelsübliche, mit und ohne Anstellvorrichtung versehene Längenmeßtaster als Meßvorrichtungen verwendet werden können, die je nach Gebrauchslage und Zweckmäßigkeit auf oder unter die beidseitig bestückbaren und auf die Tastebene gebrachten Aufspannleisten aufgebracht und dort über entsprechende, standardisierbare Klemmstücke gehalten werden.

Ein zusätzlicher Vorteil der erfindungsgemäßen Vorrichtung besteht darin, daß die axiale Verschieblichkeit der Aufspannleisten eine Möglichkeit schafft, mit einer Meßvorrichtung (einem Meßtaster) mehrere Meßstellen punktuell längs der beschriebenen Kontrollstrecke anzutasten oder die Tastspitze des Tasters über die gesamte Strecke am Werkstück anliegen zu lassen, um so die Parallelität, Zylindrizität oder Konizität in diesem Werkstück-Bereich zu kontrollieren. Dabei bietet die erfindungsgemäße Vorrichtung auch die Möglichkeit, mit einer solchen Meßvorrichtung Meßstellen unterschiedlichen Niveaus längs der Kontrollstrecke zu kontrollieren, da entsprechend der gewählten Anordnung, Meßvorrichtungen auf oder unter die Aufspannleisten zu montieren, die Tastebene durch Hinzufügen oder Wegnahme von Distanzstücken zwischen den Blattfederstegen und dem Grundkörper auf die Achshöhe des zu kontrollierenden Werkstücks anzupassen sind.

Die zur Verschiebung der Aufspannleisten dienenden Stellorgane können im Prinzip mechanisch, elektrisch, hydraulisch oder pneumatisch betrieben werden. Eine bei der erfindungsgemäßen Parallelogramm-Anordnung rechtwinklig zur Hauptbewegung auftretende geringe Querkomponente durch Verschwenken der Aufspannleisten um die mit dem Grundkörper verbundenen Einspannpunkte der Blattfederstege wird in vorteilhafter Weise durch eine besondere Ausgestaltung des Erfindungsgegenstandes, durch die Verwendung eines Rollmembranzylinders als Stellorgan ausgeglichen, so daß keine Gleitbewegung im Kontaktbereich zwischen dem Stellorgan und dem davon betätigten Blattfedersteg stattfindet. Darüberhinaus ist ein derartiger Rollmembranzylinder aufgrund seines hermetischen Abschlusses unempfindlich gegen Verschmutzungen von außen.

Bei der Kontrolle eines stillstehenden Werkstückes mit der erfindungsgemäßen Vorrichtung sind üblicherweise beide Aufspannleisten mit genau gegenüberstehenden und aufeinander abgestimmten Meßvorrichtungen bestückt. Wird das Werkstück bei der Prüfung um seine Rotationsachse bewegt, so reicht prinzipiell die Bestückung einer einzelnen Aufspannleiste aus. Im Einzelfall kann es jedoch sinnvoll sein, beide Aufspannleisten wahl- oder wechselweise mit der halben Anzahl von Meßvorrichtungen zu bestücken.

Die Erfindung wird nachfolgend anhand eines in einer Zeichnung dargestellten bevorzugten Ausführungsbeispiels näher erläutert und beschrieben. Dabei zeigen:

Figur 1 einen Längsschnitt durch einen Teil einer erfindungsgemäßen Vorrichtung,

Figur 2 eine Ansicht von oben auf die Vorrichtung gemäß Figur 1.

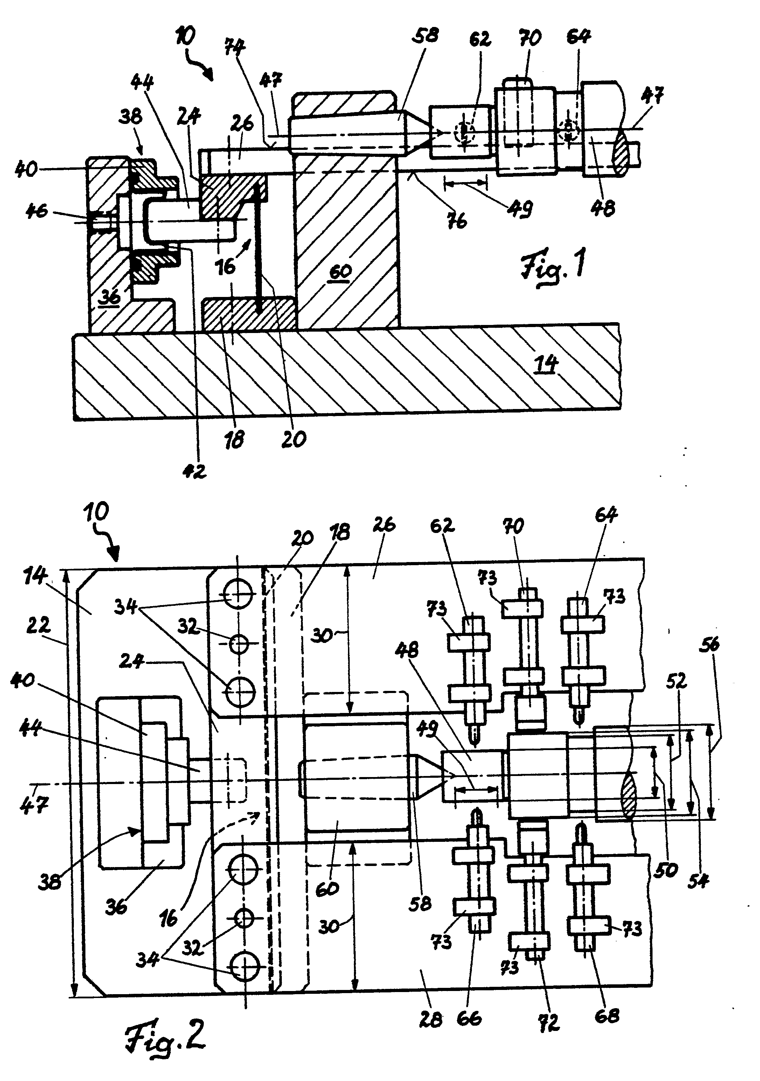

In Figur 1 der Zeichnung ist zur Vereinfachung ein Längsschnitt durch einen Teil, beispielsweise den linken Teil einer erfindungsgemäßen Vorrichtung gezeigt, dem ein um die Bruchkante gespiegelter rechter Teil der Vorrichtung im wesentlichen entspricht. Dementsprechend wird nachfolgend nur der dargestellte linke Teil der Vorrichtung beschrieben, da alle Angaben und Hinweise in gleicher Weise auch auf den nicht dargestellten rechten Teil anwendbar sind.

Das dargestellte Ausführungsbeispiel einer erfindungsgemäßen Vorrichtung 10 umfaßt einen plattenförmigen Grundkörper 14, auf dem jeweils vor, bzw. hinter dem zu prüfenden Werkstück 48 ein Blattfedersteg 16 angebracht ist.

Jeder Blattfedersteg 16 umfaßt eine Fußleiste 18, die auf dem plattenförmigen Grundkörper 14 befestigt ist, und eine Blattfeder 20, die mit der Fußleiste 18 fest verbunden ist und eine Breite 22 aufweist sowie eine Kopfleiste 24, die gleichfalls mit dieser Blattfeder 20 fest verbunden ist.

Auf den Blattfederstegen 16, genauer auf deren Kopfleisten 24 sind eine erste Aufspannleiste 26 und eine zweite Aufspannleiste 28 (siehe dazu Figur 2) jeweils beidseitig von einer Mitte der Kopfleiste 24 angebracht. Eine Breite der Aufspannleisten 26, 28 ist mit 30 bezeichnet. Die Aufspannleisten 26, 28 sind über Stifte 32 genau fixiert und vorzugsweise durch Schrauben 34 lösbar mit der Kopfleiste 24 jedes Blattfedersteges 16 verbunden. Die Blattfederstege 16 bilden mit den Aufspannleisten 26, 28 und dem plattenförmigen Grundkörper 14 eine Parallelogramm.

Wie in Figur 1 dargestellt, ist links vom Blattfedersteg 16 eine Ständer 36 vorgesehen, der fest mit dem Grundkörper 14 verbunden ist und der ein Stellorgan 38 zur Betätigung des Blattfedersteges 16 enthält.

Das Stellorgan 38 umfaßt einen auf dem Ständer 36 angebrachten Zylinderflansch 40 mit einer nicht näher bezeichneten Zylinderbohrung, in der eine Rollmembran 42 und ein Kolben 44 vorgesehen sind. Auf seiner, dem Zylinderflansch 40 gegenüberliegenden Seite ist der Ständer 36 mit einem Druckmittelanschluß 46 zur Betätigung der Rollmembran 42 und des damit verbundenen Kolbens 44 vorgesehen. Der Kolben 44 des Stellorgans 38 ist mit der Kopfleiste 24 des Blattfedersteges 16 fest verbunden.

Bei Druckbeaufschlagung wird der Kolben 44 in Richtung auf das zu prüfende Werkstück 48 parallel zu einer Werkstück-Mittellinie 47 bewegt und die durch die Kopfleiste 24 verbundenen Aufspannleisten 26, 28 vollführen einen Hub über eine Kontrollstrecke 49.

Zur Veranschaulichung der vielfältigen Meßmöglichkeiten mit der erfindungsgemäßen Vorrichtung sind bei dem zu prüfenden Werkstück 48 ein erster Durchmesser 50, ein zweiter Durchmesser 52, ein dritter Durchmesser 54 und ein vierter Durchmesser 56 dargestellt. Das Werkstück 48 ist während des Meßvorganges in Haltevorrichtungen eingespannt, von denen im dargestellten Teil der erfindungsgemäßen Vorrichtung 10 ein Haltebock 60 mit einem darin angeordneten Zentrierdorn 58 zu sehen ist. Der Zentrierdorn 58 dient in ansich bekannter Weise der Zentrierung und Einspannung des zu prüfenden Werkstückes 48.

Zur Kontrolle der Durchmesser 50, 52, 54, 56 des Werkstückes 48 sind auf der ersten Aufspannleiste 26 eine erster Längenmeßtaster 62 und ein zweiter Längenmeßtaster 64 und auf der zweiten Aufspannleiste 38 ein dritter Längenmeßtaster 66 und ein vierter Längenmeßtaster 68 angeordnet. Weiterhin ist auf der ersten Aufspannleiste 26 ein erster Abstandshalter 70 und auf der zweiten Aufspannleiste 28 ein zweiter Abstandshalter 72 angebracht. Die Längenmeßtaster 62, 64, 66, 68 sowie die Abstandshalter 70, 72 sind durch Klemmstücke 73 auf einer oberen Längsfläche 74 der Aufspannleisten 26, 28 (siehe dazu auch Figur 1) lösbar befestigt.

Vorzugsweise sind die Längenmeßtaster 62, 64, 66, 68 und die Abstandshalter 70, 72 so ausgeführt, daß sie von einer standardisierten Bauart von Klemmstücken gehalten werden können. Nach Möglichkeit werden solche Längenmeßtaster 62, 64, 66, 68 verwendet, die mit mit einer vertikalen Meßkante versehen Tastspitzen ausgestattet sind und über eine integrierte Anstelleinrichtung verfügen. Die Tastspitzen des jeweiligen Längenmeßtasters können dann durch ein externes Signal, bzw. durch das Einleiten einer Hilfsenergie in die Anstelleinrichtung an die zu kontrollierende Werkstückoberfläche angestellt werden. Als Hilfsenergie kann beispielsweise eine ansich bekannte und hier nicht dargestellte Druckluftversorgung, die durch eine entsprechende Steuereinheit gesteuert wird, dienen.

Durch die Verwendung von Abstandshaltern 70, 72, die vorzugsweise mit einem Kopf aus einem verschleißfesten Kunststoff bestückt sind, wie in der dargestellten Anordnung vorgesehen, wird eine mögliche Beschädigung der Meßvorrichtungen und des zu kontrollierenden Werkstückes 48 bei der Beschickung und Entnahme des Werkstücks 48 aus der Vorrichtung 10 vermieden, so daß das zu kontrollierende Werkstück 48 von Hand oder über eine automatische Vorrichtung eingelegt werden kann. In der in Figur 2 der Zeichnung dargestellten Anordnung sind der erste Längenmeßtaster 62 und der dritte Längenmeßtaster 66 dem ersten Durchmesser 50 des Werkstücks 48 zugeordnet, so daß durch eine Verschiebung der Aufspannleisten 26, 28 durch Betätigen des Stellorgans 38 und Einwirkung auf den Blattfedersteg 16 der erste Durchmesser 50 des Werkstücks 48 entlang der Kontrollstrecke 49 punktuell oder kontinuierlich kontrolliert werden kann, um eine eventuelle Konizität oder Balligkeit festzustellen, bzw. die Abweichung von einem vorgegebenen Sollwert zu messen. Der zweite Längenmeßtaster 64 und der vierte Längenmeßtaster 68 sind einem Abschnitt des Werkstücks 48 zugeordnet, der den zweiten Durchmesser 52, den dritten Durchmesser 54 und den vierten Durchmesser 56 des Werkstücks aufweist. Durch eine vorher beschriebenen Verschiebung der Aufspannleisten 26, 28 um die Kontrollstrecke 49 können die drei Durchmesser 52, 54, 56 nacheinander in der vorher beschriebenen Weise mit einem LängenmeßtasterPaar kontrolliert werden.

Für den Fall, daß sowohl in linken Teil der dargestellten Vorrichtung 10 als auch im rechten Teil jeweils ein Stellorgan 38 vorgesehen ist, werden die beiden Stellorgane 38 wechselweise druckbeaufschlagt, so daß die Aufspannleisten 26, 28 jeweils nach links oder rechts um die Hälfte der Kontrollstrecke 49 verschoben werden können. Dieser Fall ist in Figur 2 dargestellt, da der erste Längenmeßtaster 62 und der dritte Längenmeßtaster 66 in ihrer in Figur 2 dargestellten Ausgangsstellung vor dem eigentlichen Meßvorgang in der Mitte der ihnen zugeordneten Kontrollstrecke 49 positioniert sind. Das Verschieben der Aufspannleisten 26, 28 gegen den Widerstand der Blattfedern 20 der Blattfederstege 16 gegenüber dem ortsfest gelagerten Werkstück 48 um einen Verstellweg, der der Kontrollstrecke 49 entspricht, wird vorzugsweise über den Druck auf die Kolben 44 der Stellorgane 38 oder über Anschläge begrenzt. Für diese vorbeschriebene Meßaufgabe werden die Tastspitzen des ersten Längenmeßtasters 62 und des dritten Längenmeßtasters 66 während der gesamten Prüfphase an das Werkstück 48 angelegt und erfassen die Sollmaß- und Formabweichungen längs der Kontrollstrecke 49, wobei die Meßdatenerfassung empfehlenswerterweise nur während der Bewegung in einer Richtung erfolgen sollte.

Da erfindungsgemäß zur Kontrolle des ersten Durchmessers 50 des Werkstücks 48 nur ein aus dem ersten und dritten Längenmeßtaster 62, 66 gebildeten Meßtasterpaar benötigt wird, entfällt die Schwierigkeit, Empfindlichkeitsunterschiede bei der Verwendung von mehreren Tastern längs der Kontrollstrecke 49 kompensieren zu müssen.

Wenn, wie in dargestelltem Fall, die Kontrollstrecke 49 größer ist als eine axiale Erstreckung des durch den dritten Druchmesser 54 charakterisierten Bereiches des Werkstücks 48, können der zweite Längenmeßtaster 64 und der vierte Längenmeßtaster 68 in der dargestellten Anordnung während der Prüfphase getaktet werden, und zwar jeweils an den Endpunkten und etwa in der Mitte der Kontrollstrecke 49, so daß die Tastspitzen des zweiten Längenmeßtasters 64 und des vierten Meßtasters 68 in diesen Punkten an das Werkstück 48 angelegt werden, um auf diese Weise die Abweichungen des zweiten Durchmessers 52, des dritten Durchmessers 54 und des vierten Durchmesser 56 von ihren Sollwerten zu kontrollieren.

In weiterer vorteilhafter Ausgestaltung der Erfindung ist auch die Bestückung der Aufspannleisten 26, 28 mit Signaleinrichtungen, wie beispielsweise Näherungsschaltern, die wahlweise auf der oberen Längsfläche 74 und/oder der unteren Längsfläche 76 der Aufspannleisten 26, 28 durch Klemmstücke in gleicher Weise wie die Meßvorrichtung befestigt werden können, vorgesehen.

Soll in Erweiterung der erfindungsgemäßen Vorrichtung 10 beispielsweise ein Werkstück 48 mit einer konisch verlaufenden Fläche kontrolliert werden, so bieten die Aufspannleisten 26, 28 der erfindungsgemäßen Vorrichtung 10 die Möglichkeit, Meßtaster der vorbeschriebenen Art rechtwinklig zu der konisch verlaufenden Werkstück-Fläche auf eine Aufspannleiste zu montieren. Sofern die axiale Verstellung der Aufspannleisten 26, 28 durch das Stellorgan 38 über einen parallel zu Werkstück-Mittellinie 47 angeordneten Längenmeßtaster gemessen wird, ist auf einfache Weise die Abweichung des Winkels der kontrollierten konischen Werkstück-Fläche zur Mittellinie 47 vom Sollwert aus dem Verhältnis der axialen gemessenen Kontrollstrecke zum Meßwert des letztbeschriebenen Meßtasters über die Arkus-Tangens-Funktion zu ermitteln.

Ganz allgemein ist es vorteilhaft, wenn, wie in besonderer Ausgestaltung der Erfindung vorgesehen, die Aufspannleisten 26, 28 so gestaltet sind, daß sie zur Kontrolle mehrerer Werkstückkonturen, bzw. Werkstückfamilien geeignet sind, so daß sie bei Umrüstung von einem Werkstück auf ein anderes leicht ausgetauscht werden können. Dabei bleibt es dem Benutzer überlassen, ob er die Aufspannleisten 26, 28 mit oder ohne die darauf montierten Meß- und Hilfsvorrichtungen austauscht.

Bezugszeichen-Liste

10 Vorrichtung
14 plattenförmiger Grundkörper
16 Blattfedersteg
18 Fußleiste
20 Blattfeder
22 Breite von (20)
24 Kopfleiste
26 erste Aufspannleiste
28 zweite Aufspannleiste
30 Breite von (26, 28)
32 Stift
34 Schraube
36 Ständer
38 Stellorgan
40 Zylinderflansch
42 Rollmembran
44 Kolben

46 Druckmittelanschluß
47 Mittellinie von (48)
48 Werkstück/Welle
49 Kontrollstrecke
50 erster Durchmesser von (48)
52 zweiter Durchmesser von (48)
54 dritter Durchmesser von (48)
56 vierter Durchmesser von (48)
58 Zentrierdorn
60 Haltebock
62 erster Längenmeßtaster
64 zweiter Längenmeßtaster
66 dritter Längenmeßtaster
68 vierter Längenmeßtaster
70 erster Abstandshalter
72 zweiter Abstandshalter
73 Klemmstück
74 obere Längsfläche von (26)
76 untere Längsfläche von (26)

**Ansprüche**

1. Vorrichtung zur Kontrolle radialer Maße von Werkstücken, bestehend aus einem Grundkörper und Aufbauten zur Aufnahme von Meßvorrichtungen, **gekennzeichnet durch** folgende Merkmale:

a) die Vorrichtung (10) umfaßt einen plattenförmigen Grundkörper (14) und zwei zur Bestückung mit Meßvorrichtungen (62, 64, 66, 68) vorgesehene Aufspannleisten (26, 28), die über zwei Blattfederstege (16) miteinander und mit dem Grundkörper (14) verbunden sind;

b) die Aufspannleisten (26, 28) sind im wesentlichen parallel zu einer Mittellinie (47) des zu kontrollierenden Werkstückes (48) und die Blattfederstege (16) quer zur Mittellinie (47) angeordnet;

c) die Aufspannleisten (26, 28) bilden mit den Blattfederstegen (16) und dem Grundkörper (14) ein Parallelogramm und sind durch Betätigung wenigstens eines Stellorgans (38) um eine vorgebbare Kontrollstrecke (49) entlang der Mittellinie (47) des Werkstückes (48) verfahrbar, so daß eine Verschiebung der Aufspannleisten (26, 28) gegenüber dem Grundkörper (14) stattfindet;

d) das zu kontrollierende Werkstück (48) ist während des Meßvorganges durch Haltevorrichtungen (58), die mit dem Grundkörper (14) fest verbunden sind, in seiner Position fixiert.

2. Vorrichtung nach Anspruch 1, **dadurch gekennzeichnet,** daß die Blattfederstege (16) jeweils eine fest mit dem Grundkörper (14) verbundene Fußleiste (18), eine in der Fußleiste (18) befestigte Blattfeder (20) mit einer Breite (22) sowie eine mit der Blattfeder (20) fest verbundene und mit den Aufspannleisten (26, 28) lösbar verbundene Kopfleiste (24) umfassen.

3. Vorrichtung nach Anspruch 2, **dadurch gekennzeichnet**, daß die Breite (22) der Blattfeder (20) jedes Blattfedersteges (16) größer ist als die Summe aus den Breiten (30) der zwei Aufspannleisten (26, 28) und einem größten Durchmesser (68) des zu kontrollierenden Werkstücks (48).

4. Vorrichtung nach einem der Ansprüche 1 bis 3, **dadurch gekennzeichnet**, daß auf den Aufspannleisten (26, 28) zusätzlich zu den Meßvorrichtungen (62, 64, 66, 68) Abstandshalter (70, 72) aufbaubar sind und das die Meßvorrichtungen (62, 64, 66, 68) und die Abstandhalter (70, 72) auf den Aufspannleisten (26, 28) lösbar befestigt sind.

5. Vorrichtung nach Anspruch 4, **dadurch gekennzeichnet**, daß die Aufspannleisten (26, 28) jeweils eine obere Längsfläche (74) und eine untere Längsfläche (76) aufweisen, auf denen die Meßvorrichtungen (62, 64, 66, 68) und/oder die Abstandshalter (70, 72) wahlweise befestigbar in Anpassung an die Werkstückmittellinie (47) sind.

6. Vorrichtung nach einem der Ansprüche 1 bis 5, **dadurch gekennzeichnet**, daß eine manuell oder elektromotorisch angetriebene Spindel als Stellorgan (38) zur Betätigung eines Blattfedersteges (16) verwendet wird.

7. Vorrichtung nach einem der Ansprüche 1 bis 5, **da durch gekennzeichnet**, daß ein doppeltwirkender oder zwei einfachwirkende Hydraulikoder Pneumatikzylinder als Stellorgan (38) zur Betätigung eines Blattfedersteges (16) verwendet wird.

8. Vorrichtung nach Anspruch 7, **dadurch gekennzeichnet**, daß als einfachwirkender Zylinder ein Membranzylinder, insbesondere ein solcher mit einer Rollmembran (42) verwendet wird.

Fig.1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 079 021 (SHELTON METROLOGY LABORATORY INC.)<br>* Seite 2, Zeilen 29-40; Seiten 3-10 *<br>--- | 1 | G 01 B 5/00<br>G 01 B 5/20<br>G 01 B 7/28 |
| Y | US-A-4 604 810 (N. V. GUSCHING et al.)<br>* Ansprüche 1-14 *<br>--- | 1 | |
| Y | DE-B-2 102 535 (HOMMELWERKE GMBH)<br>* Figur 1; Spalte 3, Zeilen 17-43 *<br>--- | 1 | |
| Y | FR-A-2 552 873 (ROLLS-ROYCE MOTORS LTD.)<br>* Figur 1; Seite 2 *<br>--- | 1 | |
| Y | WO-A-8 601 885 (G. STAUFERT)<br>* Ansprüche 6-10 *<br>----- | 1 | |

**RECHERCHIERTE SACHGEBIETE (Int. Cl.5)**

G 01 B 5/00
G 01 B 7/00

Der vorliegende Recherchenbericht wurde für alle Patentansprüche erstellt

| Recherchenort | Abschlußdatum der Recherche | Prüfer |
|---|---|---|
| BERLIN | 23-06-1989 | DIETRICH A. |